# EUROPEAN PATENT SPECIFICATION

(11) **EP 2 072 572 B1**
(45) Date of publication and mention of the grant of the patent: **28.04.2010**
(21) Application number: 07025039.4
(22) Date of filing: 21.12.2007
(51) Int. Cl.: C08K 9/00, H01B 3/44

(54) **Flame retardant polymer composition comprising aluminium hydroxide as filler and a nanofiller**
Flammenhemmende Polymerzusammensetzung mit Aluminiumhydroxid als Füllstoff und Nanofüllstoff
Composition polymère ignifuge comprenant de l'hydroxyde d'aluminium en tant que charge ou nanocharge

(43) Date of publication of application: 24.06.2009
(73) Proprietor: Borealis Technology OY, 06101 Porvoo (FI)
(72) Inventor: Jungkvist, Jonas, 444 45 Stenungsund (SE); Sultan, Bernt, Ake, 444 42 Stenungsund (SE)
(74) Representative: Kador & Partner

(56) References cited:
- EP-A- 1 512 718
- DATABASE WPI Week 199301 Derwent Publications Ltd., London, GB; AN 1993-005668 XP002484606 & JP 04 334811 A (HITACHI CABLE LTD) 20 November 1992 (1992-11-20)
- DATABASE WPI Week 199506 Derwent Publications Ltd., London, GB; AN 1995-041497 XP002484607 & JP 06 322276 A (SUMITOMO ELECTRIC IND CO) 22 November 1994 (1994-11-22)

## Description

The present invention relates to a flame retardant polymer composition, to an article, in particular a wire or cable, comprising said flame retardant polymer composition, and to the use of said composition for the production of a layer of a wire or cable.

For improving the flame retardancy of polymers, several approaches are known in the art. First, it is known to include compounds containing halides into the polymer. However, these materials have the disadvantage that upon burning hazardous and corrosives gases like hydrogen halides are deliberated. This is also a disadvantage of flame retardant polymer composition based on PVC.

In a further approach, flame retardant compositions include relatively large amounts, typically 50 to 60 wt.%, of inorganic fillers such as e.g. hydrated and hydroxy compounds, which during burning decompose endothermically and deliberate inert gases at temperatures in the range of 200 to 600°C. Such inorganic fillers e.g. include Al(OH)₃ and Mg(OH)₂. However, these flame retardant materials suffer from the deterioration of the processability and mechanical properties of the polymer composition due to the high amount of filler.

A third approach as disclosed e.g. in EP 0 393 959 uses a silicon fluid or gum in a composition together with an organic polymer comprising an acrylate or acetate and an inorganic filler which is neither a hydroxide nor a substantially hydrated compound. The flame retardancy of such compositions is based on synergistic effects between these three components which in case of burning lead to the formation of a physically and firmly stable char layer that protects the polymer from further burning. Compounds based on such compositions show good flame retardancy in the limiting oxygen index (LOI) test method according to ISO 4589-A-IV. Sheathed cables and larger conduit (unsheathed) cables also fulfill specific cable tests, like e.g. the single-wire burning test according to IEC 332-1. Cables and wires, however, based on such compositions have difficulties in fulfilling the requirements of bunch tests, e.g. FIPEC test according to prEN 50399:2007. Hence, the flame retardancy of such compositions can still be improved.

It is thus an object of the present invention to provide a flame retardant polymer composition which shows a combination of good flame retardancy i.e. passes the FIPEC test according to prEN 50399:2007, good processability, such as extrudability, and good mechanical properties, such as improved surface quality.

It has surprisingly been found that the object of the present invention can be achieved by using a polymer composition which comprises an ethylene copolymer comprising alkyl acrylate comonomer units, coated aluminum hydroxide as inorganic filler and a nanofiller.

The invention therefore provides a flame retardant polymer composition comprising:
(A) an ethylene copolymer comprising alkyl acrylate comonomer units,
(B) coated aluminum hydroxide as inorganic filler
(C) a nanofiller

The flame retardant polymer composition according to the invention fulfills the requirements of class B2 and C of the FIPEC test according to prEN 50399:2007 and further shows good processability, such as extrudability, and good mechanical properties, such as improved surface quality.

Preferably, the composition is free of halogen- and phosphorous-containing compounds as flame retardancy aids, i.e. such compounds, if at all, are present in the composition in an amount of below 3000 ppm.

More preferably, the composition is entirely free of halogen-containing compounds. However, especially phosphorous containing-compounds may be present in the composition as stabilizers, usually in an amount of below 2000 ppm, more preferably below 1000 ppm.

The aluminum hydroxides as inorganic filler can be coated in several manners know to the person skilled in the art. The coating agent is added in liquid form into the filler in powder form. Most common is to coat the filler and then add the filler to the compound. Another possibility is to add filler and coating agent separately or dry mixed to the compounding unit.

In the composition, components (A); (B); (C) and optionally (D) and (E) as described below may either consist of a single chemical compound or a mixture of compounds of the required type.

The numbering of chemical groups, as used herein, is in accordance with the IUPAC system in which the groups of the periodic system of the elements are numbered from 1 to 18.

Furthermore, wherever herein the term "polyolefin" (or "polyethylene") is used both olefin homo- or copolymers (or ethylene homo- or copolymers) are meant.

The inventive a flame retardant polymer composition comprises an ethylene copolymer comprising alkyl acrylate comonomer units.

Preferably, the alkyl acrylates are selected from C₁- to C₆- alkyl acrylates, more preferably the alkyl acrylates are selected from C,- to C₄- alkyl acrylates, even more preferably the alkyl acrylates are methyl acrylate comonomers and most preferably, component (A) is an ethylene methacrylate copolymer.

Preferably, component (A) has an alkyl acrylate content from 10 to 40 wt.%, more preferably from 15 to 35 wt.% and most preferably from 20 to 30 wt.%.

In addition to alkyl acrylate comonomers component (A) may further comprise additional comonomers. These comonomers may be selected from but are not limited to C₃- to C₂₀ alpha-olefins, C₁- to C₆- alkyl methacrylates, acrylic acids, methacrylic acids and vinyl acetate. Component (A) may also contain ionomeric structures (like e.g. DuPont's Surlyn type).

In addition to ethylene and the defined comonomers, the copolymers can also contain additional monomers.

Preferably, component (A) is an ethylene copolymer comprising not more than 5 wt. % of comonomers other than alkyl acrylates, more preferably not more than 2.5 wt. % of comonomers other than alkyl acrylates, even more preferably not more than 1.0 wt. % of comonomers other than alkyl acrylates and most preferably not more than 0.5 wt. % of comonomers other than alkyl acrylates.

In the composition of the invention, preferably the amount of component (A) is from 10 to 50 wt.% of the total polymer composition, more preferably is from 15 to 40 wt. % of the total polymer composition and most preferably is from 20 to 30 wt. % of the total polymer composition.

Preferably, component (A) has,a density of at least 940 g/cm³.

Furthermore, the inventive composition comprises
(B) coated aluminum hydroxide as an inorganic filler.

The aluminum hydroxide has e.g. been coated with an organosilane, a polymer, a carboxylic acid or its salt or mixtures thereof etc. to aid processing and provide better dispersion of the filler in the organic polymer. Such coatings usually do not make up more than 3.0 wt % of the filler.

Preferably, component (B) contains equal to or less than 3.0 wt % of the coating material, more preferably equal to or less than 2.0 wt % of the coating material and most preferably equal to or less than 1.5 wt % of the coating material.

Preferably, the aluminum hydroxide of component (B) is coated with an aminosilane, more preferably a commercially available aminosilane or an aminosilane of one of the following formulas (I) or (II) is used.

AₙSi(NCD)₄₋ₙ (I)

or

AₙSi(BNCD)₄₋ₙ (II)

wherein
- N is Nitrogen and Si is silicon
- n is 0, 1, 2 or 3
- groups A are identical or different and each group A may be -R¹ or -OR², wherein
   o R¹ is hydrogen or a halogen, e.g. F, Cl, Br, I, preferably F or Cl or a linear or branched C₁- to C₂₀-hydrocarbyl group, preferably a C₁- to C₁₀-hydrocarbyl group, more preferably a C₁- to C₆-hydrocarbyl group; or
   o R² is hydrogen or a linear or branched C₁- to C₂₀-hydrocarbyl group, preferably a C₁- to C₁₀-hydrocarbyl group, more preferably a C₁- to C₆-hydrocarbyl group;
   o preferably the hydrocarbyl groups within R¹ and R² are aliphatic hydrocarbyl groups, more preferably alkyl groups;
   o each of R¹ and/or R² may optionally been substituted with one or more substituents, each substituent may be independently selected from
      ■ XR³ with
         X being selected from oxygen or sulfur, preferably X is oxygen and
         R³ is
         hydrogen; or
         a linear or branched C₁- to C₂₀-hydrocarbyl group, preferably a C₁- to C₁₀-hydrocarbyl group, more preferably a C₁- to C₆-hydrocarbyl group, preferably the hydrocarbyl groups are aliphatic hydrocarbyl groups, more preferably alkyl groups; or
         a linear or branched polyether with a molecular mass of not more than 1000 g/mol, preferably not more than 800 g/mol, more preferably not more than 600 g/mol, even more preferably not more than 400 g/mol and most preferably not more than 200 g/mol;
- groups B are identical or different and each has a molecular weight of 10 to 300 g/mol, preferably 20 to 200 g/mol or each B may be independently selected from
   o a linear or branched C₁- to C₂₀-hydrocarbyl group, preferably a C₁-to C₁₀-hydrocarbyl group, more preferably a C₆- to C₄-hydrocarbyl group, preferably the hydrocarbyl groups are aliphatic hydrocarbyl groups, more preferably alkyl groups or
   o a linear or branched polyether with a molecular mass of not more than 300 g/mol, preferably not more than 200 g/mol, more preferably not more than 100 g/mol, and
- groups C and D are identical or different and each group may be
   o hydrogen; or
   o a linear or branched C₁- to C₂₀-hydrocarbyl group, preferably a C₁-to C₁₀-hydrocarbyl group, more preferably a C₁- to C₆-hydrocarbyl group, preferably the hydrocarbyl groups are aliphatic hydrocarbyl groups, more preferably alkyl groups; or
   o an aminocarbyl group of the form R⁴R⁵N-(C=O)- or R⁴O-(C=O)-with R⁴ and R⁵ being identical or different and each is hydrogen or a linear or branched C,- to C₂₀-hydrocarbyl group, preferably a C₁-to C₁₀-hydrocarbyl group, more preferably a C,- to C₆-hydrocarbyl group, preferably the hydrocarbyl groups are aliphatic hydrocarbyl groups, more preferably alkyl groups;
   B, C and/or D may optionally been substituted with one or more substituents, each substituent may be independently selected from
   o halogens, e.g. F, Cl, Br, I, preferably F, Cl
   o alkoxide groups in the form of

      -OR²
   o silyl groups in the form of

      -(B')₄₋ₘSiA'ₘ

      with m being 1, 2, 3 or 4; or
   o amino groups in the form of

      -(B') (NC'D')

      or the substituents may be selected from

      -(CH₂)ₒ-Si(-CH₃)ₚ(-O-CH₃)₃₋ₚ

      -(CH₂)ₒSi(CH₃)ₚ(OCH₂CH₃)₃₋ₚ

      -(CH₂)ₒ-Si(-CH₂-CH₃)ₚ(-O-CH₃)₃₋ₚ

      -(CH₂)ₒ-Si(-CH₂-CH₃)ₚ(-O-CH₂-CH₃)₃₋ₚ

      wherein
      o is 1, 2, 3, 4, 5 or 6, preferably 2, 3, 4, more preferably 3 p is 0, 1, 2 or 3
      and/or

      -(CH₂)_{q}-NH₂

      -(CH₂)_{q}-NH(-CH₃)

      -(CH₂)_{q}-N(-CH₃)₂

      -(CH₂)_{q}-NH(-CH₂-CH₃)

      -(CH₂)_{q}-N(-CH₂-CH₃)₂

      wherein
      q is 1, 2, 3, 4, 5 or 6, preferably 2, 3, 4, more preferably 3
   and/or

   - (CH₂)₂NH(CH₂)₃Si(OCH₃)₃,

   - (CH₂)₂NH(CH₂)₃Si(OC₂H₅)₃,

   - (CH₂)₂NH(CH₂)₃Si(CH₃)(OCH₃)₂,

   - (CH₂)₂NH(CH₂)₃Si(CH₃)(OC₂H₅)₂,

   - (CH₂)₂NH(CH₂)₂NH(CH₂)₃Si(OCH₃)₃,

   - (CH₂)₂NH(CH₂)₂NH(CH₂)₃Si(OC₂H₅)₃,

   - (CH₂)₂NH(CH₂)₂NH(CH₂)₃Si(CH₃)(OCH₃)₂,

   - (CH₂)₂NH(CH₂)₂NH(CH₂)₃Si(CH₃)(OC₂H₅)₂

   wherein in the silyl- and amino groups
   R²' has the same definition as R² above
   A' has the same definition as A above
   B' has the same definition as B above
   C' has the same definition as C above
   D' has the same definition as D above,
this means that B', C' and/or D' may again be substituted with the groups as defined for B, C and D respectively, e.g. -(B')₄₋ₘSiA'ₘ or -(B')₄₋ₘ (NC'D')ₘ. However, preferably B', C' and D' do not carry said further substituents.

The aminosilane may also be a condensate of two or more identical or different aminosilanes of formulas (I) and/or (II) and or a cocondensate of one or more identical or different aminosilanes of formulas (I) and/or (II) with a silane of the following formula (III)

R⁶₄₋ᵣSi(-OR⁷)ᵣ (III)

wherein
o r is 1, 2, 3 or 4
o R⁶ are identical or different and each has a molecular weight of 10 to 300 g/mol, preferably 20 to 200 g/mol or is hydrogen or a linear or branched C₁- to C₂₀-hydrocarbyl group, preferably a C₁- to C₁₀-hydrocarbyl group, more preferably a C₁- to C₆-hydrocarbyl group, preferably the hydrocarbyl groups of R⁷ are aliphatic hydrocarbyl groups, more preferably alkyl groups;
   optionally R⁶ is substituted with one or more substituents, each substituent may be independently selected from
   ■ halogens, e.g. F, Cl, Br, I, preferably F and/or Cl
   ■ vinyl groups
   ■ acryloxy groups
   ■ methacryloxy groups
   ■ alkoxy groups
   ■ mercapto groups
o R⁷ is hydrogen or a linear or branched C₁- to C₂₀-hydrocarbyl group, preferably a C₁- to C₁₀-hydrocarbyl group, more preferably a C₁- to C₆-hydrocarbyl group, preferably the hydrocarbyl groups of R⁷ are aliphatic hydrocarbyl groups, more preferably alkyl groups;
○ each R⁷ may optionally been substituted with one or more substituents, each substituent may be independently selected from
   ■ XR⁸ with
      X being selected from oxygen or sulfur, preferably X is oxygen and
      R⁸ is
      hydrogen; or
      a linear or branched C₁- to C₂₀-hydrocarbyl group, preferably a C₁- to C₁₀-hydrocarbyl group, more preferably a C₁- to C₆-hydrocarbyl group, preferably the hydrocarbyl groups are aliphatic hydrocarbyl groups, more preferably alkyl groups; or
      a linear or branched polyether with a molecular mass of not more than 1000 g/mol, preferably not more than 800 g/mol, more preferably not more than 600 g/mol, even more preferably not more than 400 g/mol and most preferably not more than 200 g/mol;
The condensation of silanes is known in the art.

Preferably, the aluminum hydroxide has a surface area measured before coating of 3.0 m²/g or higher, more preferably of 3.5 m²/g or higher, even more preferably of 3.8 m²/g or higher and most preferably of 4.0 m²/g or higher.

Furthermore, the inventive composition comprises
(C) a nanofiller

The expression "nanofiller" as used herein refers to substances with the ability to disperse in the matrix polymer in such a way that structures in the nanoscale dimension (1 to 700 nm) are observed. Usually, the particles of the nanofiller are dispersed in the polymer matrix so that the maximum thickness in at least one dimension is 10 nm or less, more preferably 8 nm or less.

Polymer matrices in which a nanofiller is dispersed as described above are usually designated as "nanocomposites". Thus, this term designates a multiphase material where one phase, i.e. the nanofiller, is dispersed in one or more other phases at a nanometer level in such a way that structures in the nanoscale dimension (1 to 700 nm) are observed. However, a nanocomposite material appears homogeneous on a microscopic scale. In the sense of this definition, the inventive polymer composition can also be designated as a nanocomposite.

In the present invention as nanofillers all particulate or layered materials may be used as long as they have the ability to disperse in the matrix polymer to form a nanocomposite.

The nanofiller may either be a clay-based compound or a submicron filler such as talc, calcium carbonate and mica, which usually have been treated, for instance, by grinding to obtain particles of small, i. e. sub-micron, dimensions.

By "clay-based compounds" any organic or inorganic material is denoted which is having a structure on the nanoscopic scale of a plurality of adjacent layers. A "sub-micron filler" is any organic or inorganic material which is present in small particles of sub-micron (10⁻⁶ m) particle size.

Preferably, nanofiller (C) is of inorganic nature.

Preferably, nanofiller (C) is a clay-based compound. Clay-based compounds upon compounding of the polymer mixture are dispersed in component (A) so that individual platelets in the layered structure are separated or delaminated. As a consequence, the surface area of the clay in contact with the polymer is several magnitudes higher than that with conventional reinforcement fillers.

Further, preferably nanofiller (C) is a clay-based layered inorganic, preferably silicate, material or material mixture. Said clay materials include natural, synthetic and modified phyllosilicates. Natural clays include smectite clays, such as montmorillonite, hectorite, mica, vermiculate, bentonite. Synthetic clays include synthetic mica, synthetic saponite, synthetic hectorite. Modified clays include fluorinated montmorillonite, fluorinated mica.

Preferably, a smectite-type clay is used which comprises montmorillonites, beidellites, nontronites, saponites as well as hectonites. The most preferred smectite-type clay is montmorillonite.

Layered clay-based materials, preferably silicates may be made organophilic before compounding of the polymer composition by chemical modification such as by cation exchange treatment using alkyl ammonium or phosphonium cation complexes. Such cation complexes intercalate between the clay layers.

Preferably, the clay-based layered nanofiller (C) has been modified by intercalation with an intercalating agent.

Intercalated clay-based nanofillers may be prepared by reacting a swellable layered clay with a swelling agent, or intercalating agent. The intercalating agent may be an organic cation, containing, for instance, nitrogen or phosphorous.

The clay nanofiller may then be prepared by mixing the intercalating agent and the clay. One such method is to disperse the clay into hot water, preferably about 50 to 80 °C, to add the intercalating agent, preferably in form of an organic cation salt or a solution of such a salt in a suitable solvent with agitation, then to agitate the mixture for a suitable time to allow the organic cation to replace the metal cations present in the clay, and then to isolate the modified clay. The isolation may be done using any method known in the art, such as spray drying, spray crystallization and filtration.

Preferably, nanofiller (C) has been intercalated with an ammonium, more preferably a quartenary ammonium, compound containing intercalating agent. It is then dispersed in component (A) in such a way that structures in the nanoscale are obtained. Also mixtures of this kind of a nanofiller with other nanofillers, which may be similar or different types, may be used such as a mixture of a clay-based nanofiller and talc. If a mixture with a different type of nanofiller shall be used, then the mixture contains preferably at least 50 %, more preferably 65 %, even more preferably 80 %, even more preferably 90 % and most preferably 100 % by weight of this kind of nanofiller (C).

To prepare, this preferred kind of nanofiller, an intercalating agent is reacted with the clay. The intercalating agent comprises an ammonium compound on the formula (NR₄)⁺ X⁻, where N is nitrogen, each R may be independently hydrogen or an organic ligand and X⁻ may be halide, hydroxide or acetate anion. Preferably, the intercalating agent comprises a quartenary ammonium compound wherein each substituent R is an organic ligand.

The organic ligand may be a linear or branched alkyl group of 1 to 22 carbon atoms, an aryl group of 5 to 40 carbon atoms, an aralkyl group or an alkylene oxide group.

The amount of the intercalating agent may be 0.5 to 3.0, preferably 0.5 to 2.0 equivalents of the organic cation salt with respect to the metal cations present in the clay. The excess of the organic cation salt may be removed from the modified clay after the preparation.

Preferably, the particles of clay-based layered inorganic materials have an aspect ratio of 10 or more.

Further, preferably the total amount of components (B) and (C) does not exceed 70 wt.% of the total polymer composition, more preferably the total amount of components (B) and (C) is from 20 to 70 wt. %, even more preferably from 35 to 70 wt.%, even more preferably from 50 to 65 wt.% and most preferably from 57 to 63 wt.% of the total polymer composition.

Preferably, the weight ratio (B)/(C) is from 9 to 100, more preferably from 15 to 40 and most preferably from 20 to 33.

The flame retardant polymer composition may further comprise
(D) a maleic anhydride grafted polyethylene in an amount of up to 15 wt.% of the total polymer composition.

Preferably, component (D) is present in an amount up to 10 wt.%, more preferably component (D) is present in an amount of 2.0 to 8.0 wt.% of the total polymer composition.

Further, preferably component (D) has a maleic anhydride content of up to 5.0 wt.%, more preferably of up to 2.5 wt.% and most preferably of up to 1.0 wt.%.

Preferably, component (D) has a density of 930 kg/m³ or more.

The flame retardant polymer composition may further comprise
(E) an additional polymer selected from the group of polyolefins, polyesters, polyethers, polyurethanes, elastomeric polymers and silane-crosslinkable polymers or mixtures thereof in a total amount of up to 25 wt.% of the total polymer composition.

Preferably, component (E) is present in an amount of 2.0 to 20 wt.%, more preferably component (E) is present in an amount of 3.0 to 18 wt.%, even more preferably component (E) is present in an amount of 5.0 to 15 wt.% of the total polymer composition.

The polyolefins comprised in component (E) may be homopolymers or copolymers of ethylene, propylene and butene and polymers of butadiene or isoprene. Suitable homopolymers and copolymers of ethylene include low density polyethylene, linear low, medium or high density polyethylene and very low density polyethylene.

The elastomeric polymers comprised in component (E) maybe ethylene/propylene rubber (EPR), ethylene/propylene-diene monomer rubbers (EPDN), thermoplastic elastomer rubber (TPE) and acrylonitrile butadiene rubber (NBR).

Silane-crosslinkable polymers may also be comprised in component (E), i.e. polymers prepared using unsaturated silane monomers having hydrolysable groups capable of crosslinking by hydrolysis and condensation to form silanol groups in the presence of water and, optionally, a silanol condensation catalyst.

Preferably, component (E) is an ethylene homopolymer, more preferably component (E) is a high density ethylene homopolymer with a density of 944 kg/m³ or more, more preferably of 950 kg/m³ or more and most preferably of 955 kg/m³ or more.

In addition to the above described components, the inventive compositions may also contain conventional additives such as, for example, antioxidants or UV stabilizers in small amounts. Said additives are usually present in an amount of not more than 5.0 wt.%, preferably not more than 3.0 wt.% and more preferably not more than 1.0 wt.%.

The flame retardant polymer composition according to the invention may be prepared by mixing together the components by using any suitable means such as conventional compounding or blending apparatus, e.g. a Banbury Mixer, a 2-roll rubber mill or a twin screw extruder, Buss co-kneader, etc.

Generally, the composition will be prepared by blending the components together at a temperature which is sufficiently high to soften and plasticise the organic polymer, typically at a temperature in the range of 120 to 200 °C.

The flame retardant compositions according to the present invention can be used in many and diverse applications and products. The compositions can for example be molded, extruded or otherwise formed into moldings, sheets and fibers.

As already mentioned, a particularly preferred use of the flame retardant compositions is for the manufacture of wire and cables. The compositions can be extruded about a wire or a cable to form an insulating or jacketing layer or can be used as bedding compounds.

The invention is furthermore directed to a process for making a flame retardant polymer composition comprising:
(A) an ethylene copolymer comprising alkyl acrylate comonomer units,
(B) aluminum hydroxide as filler material
(C) a nanofiller
wherein the aluminum hydroxide is coated in the cable extruder with coating agent.

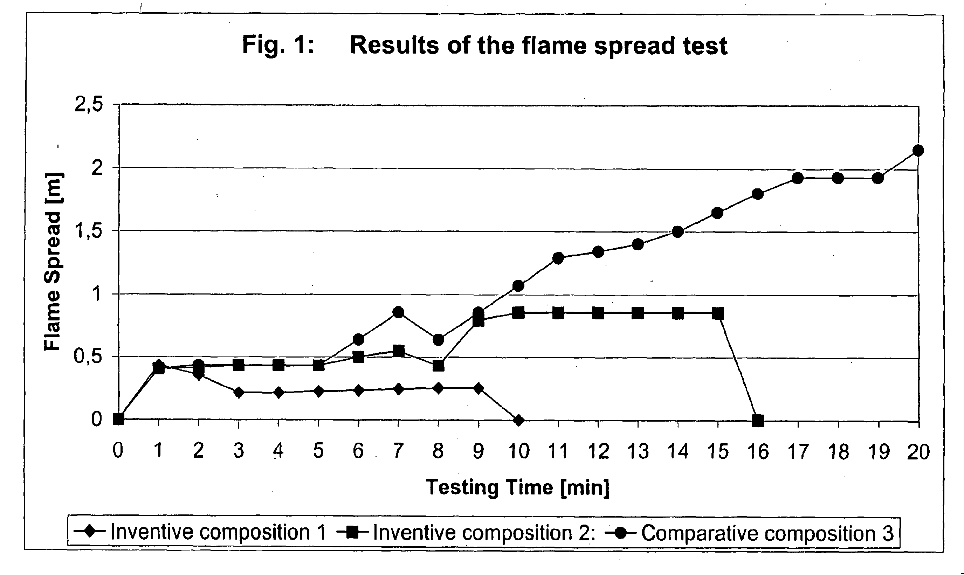

Fig. 1 shows the results of the flame spread test according to prEN 50399:2007 (FIPEC).

In the following the present invention is further illustrated by means of examples.

### Examples

### 1. Measurement Methods

### a) Melt Flow Rate

The melt flow rate MFR₂ was measured in accordance with ISO 1133 at 190°C and a load of 2.16 kg for ethylene homo and copolymers.

### b) Flame spread test

The flame spread was measured according to prEN 50399:2007 with the exception that only the flame spread was measured during the test and the air flow was regulated to 5 m³ per minute.

### c) determination of surface area of aluminum hydroxide

The determination of the specific surface area of aluminium hydroxide is done according to ISO 9277.

### d) comonomer content

Comonomer content (wt%) was determined with Fourier transform infrared spectroscopy (FTIR) determination calibrated with ¹³C-NMR. All FTIR methods were run by FTIR a Perkin Elmer 2000, 1 scan, resolution 4 cm⁻¹. The peak for the comonomer was compared to the peak of polyethylene (e.g. the peak for butyl acrylate at 3450 cm⁻¹ was compared to the peak of polyethylene at 2020 cm⁻¹ and the peak for silane at 945 cm⁻¹ was compared to the peak of polyethylene at 2665 cm⁻¹. The calibration with ¹³C-NMR is effected in a conventional manner which is well documented in the literature. Such calibrations are evident for a skilled person. As a reference for calibration, reference is made to Haslam J, Willis HA, Squirrel DC., "Identification and analysis of plastics", 2nd Edition, London, Iliffe Books, 1972. The weight-% was converted to mol-% by calculation.

e) Where in the present invention the term "particle size" is used, it shall denote the particle size is measured with geometric weight distribution (average) with standard deviation using a TEM instrument.

### 2. Compounding of compositions

Flame retardant polymer compositions according to the invention and for comparative purpose were produced by mixing together the components in a BUSS-co-kneader at a temperature of 150°C. The "Screw" speed was 30 rpm.

### 3. Filler/nanofiller masterbatches

The aluminum hydroxide/nanocomposite masterbatches have been dry mixed.

### 4. Produced compositions

Inventive composition 1:
- 24.4 wt.% ethylene methyl acrylate (EMA) copolymer with a methyl acrylate content of 25 wt.%, density of 944 kg/m³, MFR₂ = 0.4 g/10 min
- 5 wt.% maleic anhydride grafted polyethylene, 0.5 wt.% maleic anhydride, density 934 kg/m³, MFR₂ = 1.3 g/10 min
- 10.4 wt.% of HDPE, density 958 kg/m³, MFR₂ = 1.2 g/10 min
- 60 wt.% of ATH/nanocomposite, with a surface area of the aluminum hydroxide measured before coating of 4 m²/g (Martinal Char-41 distributed by Martinswerk), the nanofiller is layered silica with a average particle size of 10 µm
- 0.2 wt.% Irganox 1010, distributed by Ciba Speciality Chemicals

Inventive composition 2:
- 24.4 wt.% ethylene methyl acrylate (EMA) copolymer with a methyl acrylate content of 25 wt.%, density of 944 kg/m³, MFR₂ = 0.4 g/10 min
- 5 wt.% maleic anhydride grafted polyethylene, 0.5 wt.% maleic anhydride, density 934 kg/m³, MFR₂ = 1.3 g/10 min
- 10.4 wt.% of HDPE, density 958 kg/m³, MFR₂ = 1.2 g/10 min
- 60 wt.% of ATH/nanocomposite, with a surface area of the aluminum hydroxide measured before coating of 4 m²/g (Martinal Char-42 distributed by Martinswerk), the nanofiller is layered silica with a average particle size of 10µm
- 0.2 wt.% Irganox 1010, distributed by Ciba Speciality Chemicals

Comparative composition 3:
- 24.4 wt.% ethylene methyl acrylate (EMA) copolymer with a methyl acrylate content of 25 wt.%, density of 944 kg/m³, MFR₂ = 0.4 g/10 min
- 5 wt.% maleic anhydride grafted polyethylene, 0.5 wt.% maleic anhydride, density 934 kg/m³, MFR₂ = 1.3 g/10 min
- 10.4 wt.% of HDPE, density 958 kg/m³, MFR₂ = 1.2 g/10 min
- 60 wt.% of uncoated aluminum hydroxide with a surface area of 4 m²/g (Martinal OL 104 LE distributed by Martinswerk)
- 0.2 wt.% Irganox 1010, distributed by Ciba Speciality Chemicals

### 4. Cables

The cables consist of three solid copper conductors with a cross section area of 1.5 mm² covered with an insulation with a thickness of 0.5 mm. The insulated conductors are twisted and covered with bedding. The total diameter of the conductors, insulation and bedding is 6.0 mm. The compositions 1 to 3 as described above are the then put as a jacket on top of the bedding. The final diameter of the cable is 8.4 mm.

The insulation consists of a composition made of
- 51.8 wt % ethylene butylacrylate (BA) copolymer with BA content of 17 wt.%, MFR₂ = 1.1 g/10min;
- 5 wt % of silicone masterbatch with 40 wt % of polydimethylsiloxane, 60 wt% of LDPE;
- 12.5 wt% of polypropylene with MFR₂, 230°C = 1.3 g/10min;
- 30 wt % CaCO₃ coated with stearic acid, having an average particle size (d₅₀-value) of 1.4 microns;
- 0.1 wt % Irganox MD 1024, distributed by Ciba Specialty Chemicals;
- 0.35 wt % Irganox 1010, distributed by Ciba Specialty Chemicals;
- 0.125 wt % Tinuvin 622, distributed by Ciba Specialty Chemicals;
- 0.125 wt % Chimasorb 944, distributed by Ciba Specialty Chemicals.

The used bedding material was FM1239 distributed by Melos GmbH.

The jackets were extruded with wire guide with diameter of 7.9 mm and a die with a diameter of 14.6 mm.

### 5. Results

In a flame spread test according to prEN 50399:2007 the flame spread of inventive composition 1 is not more than 0.43 meters during the test. The flame spread rises to the maximum after 1 minute, and after about 10.5 minutes the flame spread is zero and not rising again.

Inventive composition 2 shows a flame spread after 10 minutes of not more than 0.86 meters and after 16 minutes the flame spread is zero.

Comparative composition 3 shows a constantly rising flame spread with time, the flame spread being more than 2.1 meters after 20 minutes.

Hence, the inventive compositions show a lower flame spread than the comparative composition.

The results of the flame spread tests of inventive compositions 1 and 2 and comparative composition 3 are shown in table 1 below. Further Fig. 1 shows the performance of inventive compositions 1 and 2 and comparative composition 3 in the flame spread test according to prEN 50399:2007.

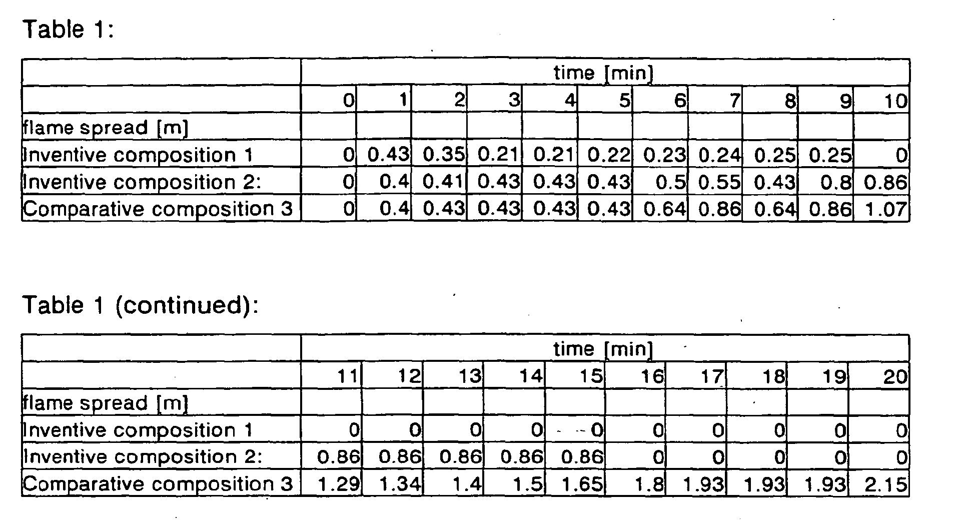

Thus, the bunches of cables comprising the inventive polymer compositions fulfill the requirements of class B2 or C according to the FIPEC test prEN 50399:2007.

## Claims

1. A flame retardant polymer composition comprising:
(A) an ethylene copolymer comprising alkyl acrylate comonomer units,
(B) coated aluminum hydroxide as inorganic filler
(C) a nanofiller.

2. A flame retardant composition according to claim 1 wherein the alkyl acrylate comonomer units of component (A) are selected from C₁- to C₆- alkyl acrylates.

3. A flame retardant composition according to any of the preceding claims wherein the alkyl acrylate comonomer units of component (A) are methyl acrylate comonomers.

4. A flame retardant composition according to any of the preceding claims wherein component (A) is an ethylene methacrylate copolymer.

5. A flame retardant composition according to any of the preceding claims wherein the amount of component (A) is from 10 to 50 wt.% of the total polymer composition.

6. A flame retardant composition according to any of the preceding claims wherein component (A) has an comonomer content from 10 to 40 wt.%.

7. A flame retardant composition according to any of the preceding claims wherein the aluminum hydroxide has a surface area measured before coating of 3.0 m²/g or more.

8. A flame retardant composition according to any of the preceding claims wherein the aluminum hydroxide is coated with an aminosilane.

9. A flame retardant composition according to any of the preceding claims wherein component (C) is a clay-based-layered material.

10. A flame retardant composition according to any of the preceding claims wherein the amount of components (B) and (C) does not exceed 70 % by weight of the total composition.

11. A flame retardant composition according to any of the preceding claims wherein the weight ratio (B)/(C) is from 9 to 100.

12. A flame retardant composition according any of the preceding claims wherein the composition further comprises:
(D) a maleic anhydride grafted polyethylene in an amount of up to 15 wt.% of the total polymer composition

13. A flame retardant composition according any of the preceding claims wherein the composition further comprises:
(E) an additional polymer selected from the group of polyolefins, polyesters, polyethers, polyurethanes, elastomeric polymers and silane-crosslinkable polymers or mixtures thereof in a total amount of up to 25 wt.% of the total polymer composition.

14. A flame retardant composition according to any of the preceding claims wherein component (E) is an ethylene homopolymer.

15. A flame retardant composition according to any of the preceding claims wherein component (E) is a high density ethylene homopolymer.

16. Articles comprising the flame retardant polymer composition according to any of the preceding claims.

17. Article according to claim 16 wherein the article is a wire or cable comprising a layer made of the flame retardant composition according to any of claims 1 to 15.

18. Use of a flame retardant polymer composition according to any of claims 1 to 15 in the production of a layer of a wire or cable.

19. Process for making a flame retardant polymer composition comprising:
(A) an ethylene copolymer comprising alkyl acrylate comonomer units,
(B) aluminum hydroxide as filler material
(C) a nanofiller
wherein the aluminum hydroxide is coated in the cable extruder with coating agent.

## Patentansprüche

1. Flammhemmende Polymerzusammensetzung, umfassend:
(A) ein Ethylencopolymer, das Einheiten in Form eines Alkylacrylat-Comonomers umfaßt,
(B) beschichtetes Aluminiumhydroxid als anorganischen Füllstoff,
(C) einen Nanofüllstoff.

2. Flammhemmende Zusammensetzung nach Anspruch 1, wobei die Einheiten in Form eines Alkylacrylat-Comonomers der Komponente (A) aus C₁-C₆-Alkylacrylaten ausgewählt sind.

3. Flammhemmende Zusammensetzung nach einem der vorstehenden Ansprüche, wobei die Einheiten in Form eines Alkylacrylat-Comonomers der Komponente (A) Methylacrylat-Comonomere sind.

4. Flammhemmende Zusammensetzung nach einem der vorstehenden Ansprüche, wobei die Komponente (A) ein Ethylen-Methacrylat-Copolymer ist.

5. Flammhemmende Zusammensetzung nach einem der vorstehenden Ansprüche, wobei die Menge der Komponente (A) 10 bis 50 Gew.-% der gesamten Polymerzusammensetzung ausmacht.

6. Flammhemmende Zusammensetzung nach einem der vorstehenden Ansprüche, wobei die Komponente (A) einen Comonomergehalt von 10 bis 40 Gew.-% aufweist.

7. Flammhemmende Zusammensetzung nach einem der vorstehenden Ansprüche, wobei das Aluminiumhydroxid eine vor dem Beschichten gemessene Oberfläche von 3,0 m²/g oder mehr aufweist.

8. Flammhemmende Zusammensetzung nach einem der vorstehenden Ansprüche, wobei das Aluminiumhydroxid mit einem Aminosilan beschichtet ist.

9. Flammhemmende Zusammensetzung nach einem der vorstehenden Ansprüche, wobei die Komponente (C) ein auf Ton basierendes Schichtmaterial ist.

10. Flammhemmende Zusammensetzung nach einem der vorstehenden Ansprüche, wobei die Menge der Komponenten (B) und (C) 70 Gew.-% der gesamten Zusammensetzung nicht übersteigt.

11. Flammhemmende Zusammensetzung nach einem der vorstehenden Ansprüche, wobei das Gewichtsverhältnis (B)/(C) 9 bis 100 beträgt.

12. Flammhemmende Zusammensetzung nach einem der vorstehenden Ansprüche, wobei die Zusammensetzung ferner umfaßt:
(D) ein mit Maleinsäureanhydrid gepfropftes Polyethylen in einer Menge von bis zu 15 Gew.-% der gesamten Polymerzusammensetzung.

13. Flammhemmende Zusammensetzung nach einem der vorstehenden Ansprüche, wobei die Zusammensetzung ferner umfaßt:
(E) ein weiteres Polymer, das aus der Gruppe von Polyolefinen, Polyestern, Polyethern, Polyurethanen, elastomeren Polymeren und mit Silan vernetzbaren Polymeren oder Gemischen davon ausgewählt ist, in einer Gesamtmenge von bis zu 25 Gew.-% der gesamten Polymerzusammensetzung.

14. Flammhemmende Zusammensetzung nach einem der vorstehenden Ansprüche, wobei die Komponente (E) ein Ethylenhomopolymer ist.

15. Flammhemmende Zusammensetzung nach einem der vorstehenden Ansprüche, wobei die Komponente (E) ein Ethylenhomopolymer hoher Dichte ist.

16. Gegenstände, die die flammhemmende Polymerzusammensetzung nach einem der vorstehenden Ansprüche umfassen.

17. Gegenstand nach Anspruch 16, wobei der Gegenstand ein Draht oder Kabel ist, der bzw. das eine Schicht aufweist, die aus der flammhemmenden Zusammensetzung nach einem der Ansprüche 1 bis 15 hergestellt ist.

18. Verwendung einer flammhemmenden Polymerzusammensetzung nach einem der Ansprüche 1 bis 15 bei der Herstellung einer Schicht eines Drahts oder Kabels.

19. Verfahren zum Herstellen einer flammhemmenden Polymerzusammensetzung, umfassend:
(A) ein Ethylencopolymer, das Einheiten in Form eines Alkylacrylat-Comonomers umfaßt,
(B) beschichtetes Aluminiumhydroxid als Füllstoff,
(C) einen Nanofüllstoff,
wobei das Aluminiumhydroxid in der Kabelextrusionsvorrichtung mit einem Beschichtungsmittel überzogen wird.

## Revendications

1. Composition polymère ignifuge comprenant :
(A) un copolymère d'éthylène comprenant des unités de comonomère d'acrylate d'alkyle,
(B) de l'hydroxyde d'aluminium revêtu en tant que charge inorganique,
(C) une nanocharge.

2. Composition ignifuge selon la revendication 1, dans laquelle les unités de comonomère d'acrylate alkyle du composant (A) sont choisies parmi des acrylate d'alkyle en C₁ à C₆.

3. Composition ignifuge selon l'une quelconque des revendications précédentes, dans laquelle les unités de comonomère d'acrylate d'alkyle du composant (A) sont des comonomères d'acrylate de méthyle.

4. Composition ignifuge selon l'une quelconque des revendications précédentes, dans laquelle le composant (A) est un copolymère d'éthylène méthacrylate.

5. Composition ignifuge selon l'une quelconque des revendications précédentes, dans laquelle la quantité de composant (A) représente de 10 % à 50 % en poids de la composition polymère totale.

6. Composition ignifuge selon l'une quelconque des revendications précédentes, dans laquelle le composant (A) possède une teneur en comonomère de 10 % à 40 % en poids.

7. Composition ignifuge selon l'une quelconque des revendications précédentes, dans laquelle l'hydroxyde d'aluminium présente une superficie mesurée avant le revêtement de 3,0 m²/g ou plus.

8. Composition ignifuge selon l'une quelconque des revendications précédentes, dans laquelle l'hydroxyde d'aluminium est revêtu avec un aminosilane.

9. Composition ignifuge selon l'une quelconque des revendications précédentes, dans laquelle le composant (C) est un matériau stratifié à base d'argile.

10. Composition ignifuge selon l'une quelconque des revendications précédentes, dans laquelle la quantité de composants (B) et (C) n'excède pas 70 % en poids de la composition totale.

11. Composition ignifuge selon l'une quelconque des revendications précédentes, dans laquelle le rapport en poids (B)/(C) est de 9 à 100.

12. Composition ignifuge selon l'une quelconque des revendications précédentes, laquelle composition comprend en outre :
(D) un polyéthylène greffé d'anhydride maléique en une quantité allant jusqu'à 15 % en poids de la composition polymère totale.

13. Composition ignifuge selon l'une quelconque des revendications précédentes, laquelle composition comprend en outre :
(E) un polymère supplémentaire choisi parmi le groupe des polyoléfines, polyesters, polyéthers, polyuréthanes, polymères élastomères et polymères réticulables au silane ou leurs mélanges en une quantité totale allant jusqu'à 25 % en poids de la composition polymère totale.

14. Composition ignifuge selon l'une quelconque des revendications précédentes, dans laquelle le composant (E) est un homopolymère d'éthylène.

15. Composition ignifuge selon l'une quelconque des revendications précédentes, dans lequel le composant (E) est un homopolymère d'éthylène à haute densité.

16. Articles comprenant la composition polymère ignifuge selon l'une quelconque des revendications précédentes.

17. Article selon la revendication 16, lequel article est un fil ou un câble comprenant une couche faite de la composition ignifuge selon l'une quelconque des revendications 1 à 15.

18. Utilisation d'une composition polymère ignifuge selon l'une quelconque des revendications 1 à 15 dans la production d'une couche d'un fil ou d'un câble.

19. Procédé pour la préparation d'une composition polymère ignifuge comprenant :
(A) un copolymère d'éthylène comprenant des unités de comonomère d'alkyle acrylate,
(B) de l'hydroxyde d'aluminium en tant que matériau de charge,
(C) une nanocharge,
où l'hydroxyde aluminium est revêtu dans l'extrudeuse de câble avec un agent de revêtement.
